# FASCICULE DE BREVET EUROPEEN

(11) **EP 2 143 587 B1**
(45) Date de publication et mention de la délivrance du brevet: **12.10.2016**
(21) Numéro de dépôt: 09161971.8
(22) Date de dépôt: 04.06.2009
(51) Int. Cl.: B60K 37/02, B60W 30/08, B60W 50/08, B60W 30/16

(54) **Procédé d'aide au respect d'un seuil pour un paramètre de conduite d'un véhicule par son conducteur**
Verfahren zur Unterstützung des Fahrers beim Einhalten eines Fahrgrenzwertes für das Führen eines Fahrzeugs
Method for assissting a driver in respecting a driving limit value when driving a vehicle

(30) Priorité: 11.07.2008 FR 0854767
(43) Date de publication de la demande: 13.01.2010
(73) Titulaire: PEUGEOT CITROËN AUTOMOBILES SA, 78140 Vélizy-Villacoublay (FR)
(72) Inventeur: Dabek, Matthieu, 91440 Bures sur Yvette (FR); Bayard, Loïc, 91940 Les Ulis (FR)
(74) Mandataire: Vigand, Régis Louis Michel

(56) Documents cités:
- EP-A- 1 359 077
- EP-A- 1 531 112
- DE-B3-102004 005 815
- DE-C1- 19 941 972
- US-A1- 2004 212 483
- "Kraftfahrtechnisches Handbuch, 23. Auflage" 1999, ROBERT BOSCH GMBH, VIEWEG VERLAG , BRAUNSCHWEIG, WIESBADEN , XP002511769 * page 715 *

## Description

L'invention concerne le domaine des procédés d'aide au respect d'un seuil pour un paramètre de conduite d'un véhicule par son conducteur. L'invention ne concerne de préférence que des procédés passifs de surveillance, c'est-à-dire non couplés à un procédé d'asservissement du paramètre de conduite à la valeur de consigne choisie par le conducteur. Le paramètre de conduite est de préférence le temps inter véhicules séparant le véhicule du conducteur du véhicule qui précède le véhicule du conducteur. Le procédé est de préférence un procédé d'aide au respect d'un temps inter véhicules et non pas un procédé d'aide à la conduite asservissant le temps inter véhicules à une valeur de consigne, un procédé d'aide à la conduite ayant une action directe sur le moteur et les freins du véhicule.

Selon un art antérieur, par exemple décrit dans la demande de brevet anglaise GB 2278320, il est connu un procédé d'aide au respect d'un seuil pour un paramètre de conduite d'un véhicule par son conducteur, comprenant, lorsque la valeur réelle du paramètre de conduite franchit le seuil dans un sens prédéterminé, une alerte visuelle. L'alerte visuelle consiste dans l'affichage, en lieu et place d'une représentation graphique du paramètre de conduite, d'un pictogramme d'alerte. Le pictogramme d'alerte est affiché constamment lorsqu'un seuil a été franchi. Un tel affichage présente d'une part l'inconvénient de ne pas alerter suffisamment le conducteur à cause de son caractère constant et d'autre part l'inconvénient de ne pas alerter immédiatement le conducteur quant au type de paramètre de conduite concerné par l'alerte puisque l'affichage du pictogramme d'alerte a effacé la représentation graphique du paramètre de conduite.

Il est par ailleurs connu du document DE102004005815, un système conforme au préambule de la revendication 1.

L'invention propose un procédé d'aide au respect d'un seuil pour un paramètre de conduite d'un véhicule par son conducteur qui, d'une part alerte suffisamment le conducteur grâce au caractère clignotant du pictogramme d'alerte tout en le renseignant sur la nature de l'alerte puisque la représentation graphique du paramètre de conduite n'est pas effacée ou seulement partiellement effacée. Le clignotement attire efficacement le regard du conducteur quant à la présence d'une alerte tandis que la représentation graphique du paramètre de conduite, au moins partielle, renseigne immédiatement le conducteur quant à la nature de l'alerte concernée.

Selon l'invention, il est prévu un procédé conforme à la partie caractérisante de la revendication 1.

De cette manière la perspective fuyante de la route vers l'avant se prolonge graphiquement pour aboutir directement dans le pictogramme d'alerte. Ainsi, l'effet est graphiquement plus saisissant pour le conducteur ce qui lui permettra de prendre conscience de l'alerte plus rapidement et donc de pouvoir la gérer plus efficacement.

Lorsque la valeur réelle du paramètre de conduite n'a encore pas franchi le seuil dans le sens prédéterminé, la représentation graphique du paramètre de conduite sans présence du pictogramme d'alerte est affichée sur l'écran. C'est donc au moins en partie la même représentation graphique du paramètre de conduite qui est conservée entre le mode normal de roulage du véhicule sans franchissement du seuil pour le paramètre de conduite et le mode alerte de roulage du véhicule avec franchissement du seuil pour le paramètre de conduite. Ainsi, le conducteur déjà familiarisé avec la représentation graphique du paramètre de conduite reconnaîtra la nature de l'alerte encore plus rapidement.

De préférence, la représentation graphique du paramètre de conduite avec présence d'un pictogramme d'alerte et la représentation graphique du paramètre de conduite sans présence du pictogramme d'alerte présentent un ou plusieurs éléments communs restant immobiles lors dudit affichage en alternance dans le temps. Ainsi, dans un premier temps, le clignotement du pictogramme d'alerte attire l'attention du conducteur, puis dans un second temps, la partie constante et immobile de la symbolisation du type de paramètre de conduite permet au conducteur dont le regard est maintenant sur l'écran d'identifier rapidement et sans trop d'efforts le type de paramètre de conduite concerné par l'alerte.

De préférence, le seuil est représentatif de la valeur de consigne, choisie par le conducteur, du paramètre de conduite.

Ainsi, le conducteur aura immédiatement une idée de la valeur du seuil qui a été franchie et évaluera donc rapidement la gravité résultant du franchissement de seuil. Par exemple, dans le cas du temps inter véhicules, descendre en dessous d'une valeur de consigne de 2.5 secondes présente une gravité moindre que descendre en dessous d'une valeur de consigne de 1.0 secondes, car la rapidité de réflexe requise en cas de freinage brutal du véhicule précédant le véhicule du conducteur est moins importante pour une valeur de consigne de 2.5 secondes que pour une valeur de consigne de 1.0 secondes.

De préférence, le pictogramme d'alerte n'est plus affiché lors du franchissement, par la valeur réelle du paramètre de conduite, dans le sens opposé au sens prédéterminé, d'un autre seuil distinct dudit seuil précédemment franchi dans le sens prédéterminé, de manière à présenter un phénomène d'hystérésis. Ce phénomène d'hystérésis permet d'éviter un scintillement entre deux types d'affichage, l'affichage normal et l'affichage d'alerte, scintillement qui serait ici particulièrement pénible puisque l'affichage d'alerte comprend déjà un clignotement, le clignotement du pictogramme d'alerte.

De préférence, les seuils sont situés d'une part de part et d'autre de la valeur de consigne, choisie par le conducteur, du paramètre de conduite, et d'autre part au voisinage de la valeur de consigne, choisie par le conducteur, du paramètre de conduite. Ainsi, le confort procuré par le phénomène d'hystérésis n'est pas réalisé au détriment de la réactivé du procédé en ce qui concerne la transition entre le mode normal et le mode alerte. Par exemple, dans le cas du temps inter véhicules, les seuils seront distants de 0.1 secondes de la valeur de consigne choisie par le conducteur. Les seuils sont dans ce cas variables et directement dépendants de la valeur de consigne choisie par le conducteur.

De préférence, le paramètre de conduite est le temps inter véhicules séparant le véhicule du conducteur du véhicule qui précède le véhicule du conducteur. C'est un paramètre qu'il est particulièrement intéressant pour le conducteur de véhicule de pouvoir respecter, car ce paramètre est particulièrement représentatif d'un risque de collision avec le véhicule qui précède. En particulier, en l'absence d'un dispositif d'aide à la conduite sur le véhicule, ce procédé d'aide au respect d'un seuil de temps inter véhicules est particulièrement précieux pour diminuer le risque de collision avec le véhicule qui précède le véhicule du conducteur.

De préférence, la fréquence du clignotement du pictogramme d'alerte est d'autant plus élevée que l'écart entre la valeur réelle du paramètre de conduite et le seuil franchi est plus important. Ainsi l'attention du conducteur est d'autant plus violemment attirée sur l'alerte que l'alerte est représentative d'un danger potentiel plus élevé pour le conducteur. En effet, plus le véhicule du conducteur se trouve loin de la valeur de consigne choisie par le conducteur, plus la situation du conducteur risque d'être inconfortable voire dangereuse lorsque le conducteur se rend effectivement compte de cette situation.

Dans un premier mode de réalisation préférentiel, l'écran est un écran à matrice de points et le pictogramme d'alerte est ajouté à une représentation graphique du paramètre de conduite tout en remplaçant une partie de la représentation graphique du paramètre de conduite. La souplesse d'affichage présentée par un écran de type matrice à point permet de pleinement mettre en valeur le clignotement du pictogramme d'alerte tout en faisant disparaître une partie de la représentation graphique du paramètre de conduite, ce qui permet de gagner de la place sur l'écran.

Dans un deuxième mode de réalisation préférentiel, l'écran est un écran à segments dédiés d'un dispositif de vision tête haute inclus dans le véhicule et le pictogramme d'alerte est ajouté à une représentation graphique du paramètre de conduite sans modifier cette représentation graphique du paramètre de conduite. La technologie des segments dédiés ne permettant pas de remplacer une partie de la représentation graphique du paramètre de conduite par le pictogramme d'alerte, ce qui aurait permis de gagner de la place sur l'écran, autant alors garder l'intégralité de la représentation graphique du paramètre de conduite, ce qui rend un peu plus immédiatement claire sa signification pour le conducteur.

De préférence, la représentation graphique inclut au moins un pictogramme symbolisant le véhicule précédant le véhicule du conducteur, si un tel véhicule précédent a été détecté.

Représenter le véhicule qui précède permet de mieux se représenter un risque de collision potentiel par rapport à ce véhicule.

De préférence, la représentation graphique inclut au moins l'affichage de la valeur réelle du paramètre de conduite, l'affichage de ladite valeur réelle du paramètre de conduite n'étant pas modifié par le clignotement du pictogramme d'alerte. Ainsi, puisque le clignotement du pictogramme d'alerte n'affecte pas cette valeur réelle, le conducteur va pouvoir l'appréhender plus rapidement, sans effort de focalisation oculaire, que si cette valeur réelle bougeait en cadence avec le clignotement du pictogramme d'alerte.

Avantageusement, l'affichage de la valeur réelle du paramètre de conduite est un affichage alphanumérique. Un affichage par pictogrammes serait moins facilement décodable par le conducteur dans cet environnement d'alerte qui présente un clignotement sur l'écran. Ce chiffre fixe sur l'écran est son point de repère quant au seuil qui vient d'être malencontreusement franchi, et lui permet d'appréhender précisément la valeur réelle du paramètre de conduite.

De préférence, le procédé d'aide au respect d'un seuil pour un paramètre de conduite n'est pas couplé à un procédé d'asservissement du paramètre de conduite à la valeur de consigne choisie par le conducteur. C'est donc un procédé passif, simple à utilise et peu coûteux à installer, surtout au regard de l'importance du service rendu au conducteur lequel est aidé à conformer sa conduite du véhicule à la valeur de consigne qu'il a lui-même choisi pour se garantir une conduite prudente, limitant ainsi le niveau de risque de collision potentiel avec le véhicule qui le précède. La valeur du paramètre de conduite est avantageusement représentative d'un niveau de risque de collision avec le véhicule qui précède le véhicule du conducteur.

L'invention va maintenant être décrite plus en détail à l'aide des figures ci-après, données à titre d'exemples illustratifs et non limitatifs, où :
- la figure 1 représente schématiquement un premier exemple de mise en oeuvre du procédé selon l'invention, dans lequel aucun véhicule précédant le véhicule du conducteur n'a été détecté ;
- la figure 2 représente schématiquement un premier exemple de mise en oeuvre du procédé selon l'invention, dans lequel un véhicule précédant le véhicule du conducteur a été détecté et une valeur de consigne de temps inter véhicules a été choisie par le conducteur ;
- les figures 3 et 4 représentent schématiquement un premier exemple de mise en oeuvre du procédé selon l'invention, dans lequel la valeur réelle du temps inter véhicules est devenue inférieure à la valeur de consigne de temps inter véhicules choisie par le conducteur, les figures 3 et 4 étant affichées sur l'écran alternativement dans le temps ;
- la figure 5 représente schématiquement un deuxième exemple de mise en oeuvre du procédé selon l'invention, dans lequel aucun véhicule précédant le véhicule du conducteur n'a été détecté ;
- la figure 6 représente schématiquement un deuxième exemple de mise en oeuvre du procédé selon l'invention, dans lequel un véhicule précédant le véhicule du conducteur a été détecté et une valeur de consigne de temps inter véhicules a été choisie par le conducteur ;
- les figures 7 et 8 représentent schématiquement un deuxième exemple de mise en oeuvre du procédé selon l'invention, dans lequel la valeur réelle du temps inter véhicules est devenue inférieure à la valeur de consigne de temps inter véhicules choisie par le conducteur, les figures 7 et 8 étant affichées sur l'écran alternativement dans le temps.

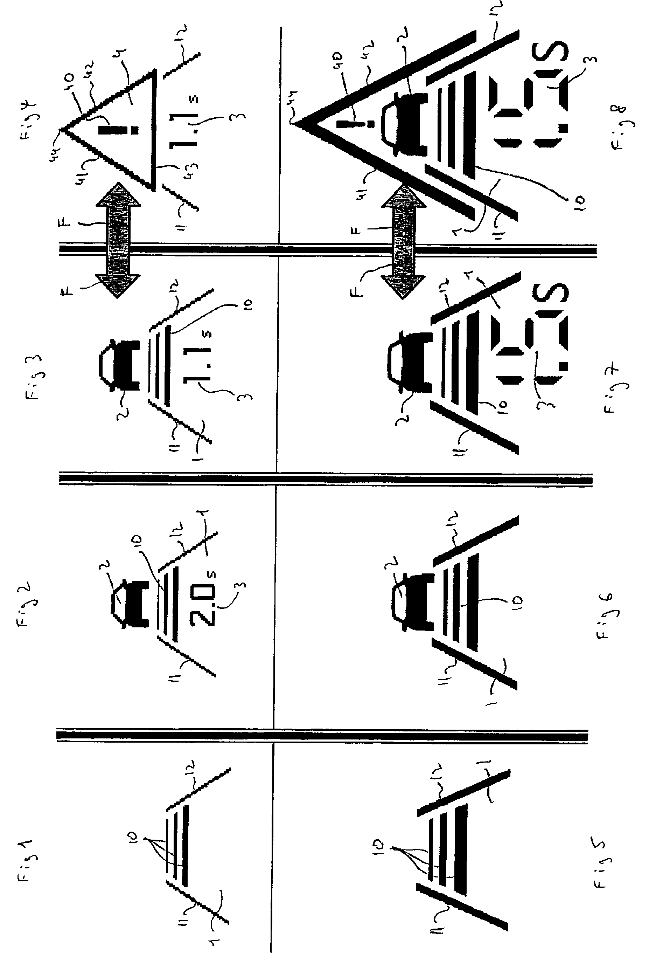

L'ensemble des figures 1 à 8 sera décrit en liaison avec un exemple particulier de paramètre de conduite qui est le temps inter véhicules. Mais d'autres paramètres de conduite pourraient être utilisés. Le temps inter véhicules à un instant donné est le temps qu'il faudrait au véhicule du conducteur pour rejoindre, en gardant la vitesse qu'il a à l'instant donné, la position qui est occupée à l'instant donné par le véhicule qui le précède. Le véhicule qui précède le véhicule du conducteur est encore appelé véhicule cible.

Les figures 1 à 4 correspondent au premier exemple de mise en oeuvre du procédé selon l'invention, c'est-à-dire à un écran d'affichage de type matrice à points, pour une vision classique sur la planche de bord, c'est-à-dire que chaque point de la matrice de l'écran peut être allumé ou éteint indépendamment des autres. Les figures 5 à 8 correspondent au deuxième exemple de mise en oeuvre du procédé selon l'invention, c'est-à-dire à un écran d'affichage de type à segments dédiés, pour une vision tête haute du conducteur, c'est-à-dire que l'écran comprend des zones gravées de manière fixe, et que chaque point de l'écran soit ne peut jamais être allumé soit peut être allumé mais uniquement en même temps que tous les autres points de la zone à laquelle il appartient, chaque point ne pouvant pas appartenir à plus d'une zone.

La figure 1 représente schématiquement un premier exemple de mise en oeuvre du procédé selon l'invention, dans lequel aucun véhicule précédant le véhicule du conducteur n'a été détecté. Une route 1 est la représentation graphique du temps inter véhicules, c'est-à-dire la représentation graphique du type de paramètre de conduite, mais non pas de sa valeur ; c'est une représentation graphique symbolisant le temps inter véhicules. La route 1 symbolise la route que voit le conducteur du véhicule. La route 1 est délimitée par deux bords 11 et 12 qui ne sont pas parallèles et qui semblent vouloir se rejoindre à l'horizon. Entre les deux bords de route 11 et 12 sont disposées des barres horizontales 10 qui témoignent de l'état activé du procédé d'aide au respect du temps inter véhicules.

La figure 2 représente schématiquement un premier exemple de mise en oeuvre du procédé selon l'invention, dans lequel un véhicule précédant le véhicule du conducteur a été détecté et une valeur de consigne de temps inter véhicules a été choisie par le conducteur. Sur l'écran apparaît un pictogramme de véhicule 2 symbolisant le véhicule qui précède le véhicule du conducteur, montrant ainsi qu'un véhicule précédant le véhicule du conducteur a été détecté par le procédé d'aide au respect du temps inter véhicules. Ce pictogramme de véhicule 2 immobile est situé au-dessus des barres horizontales 10. La valeur réelle du temps inter véhicules 3, valant ici 2.0 secondes, est également affichée. Elle- est affichée entre les bords de route 11 et 12, sous les barres horizontales 10, de manière à constituer une même ligne de vision verticale, le long de la route 1, avec les barres horizontales 10 et le pictogramme de véhicule 2.

Les figures 3 et 4 représentent schématiquement un premier exemple de mise en oeuvre du procédé selon l'invention, dans lequel la valeur réelle du temps inter véhicules est devenue inférieure à la valeur de consigne de temps inter véhicules choisie par le conducteur, les figures 3 et 4 étant affichées sur l'écran alternativement dans le temps.

L'affichage, qui est dans le mode normal lorsque la valeur réelle du temps inter véhicules reste au dessus de la valeur de consigne du temps inter véhicules, passe en mode alerte, lorsque la valeur réelle de temps inter véhicules tombe en dessous d'un certain seuil valant de préférence soit la valeur de consigne du temps inter véhicules, soit la valeur de consigne du temps inter véhicules diminuée d'une marge assez faible, par exemple de l'ordre de 0.1 secondes, permettant ainsi la mise en place d'une hystérésis évitant un scintillement qui serait dû à une oscillation erratique entre le mode normal et le mode alerte lorsque le conducteur maintiendrait la valeur réelle du temps inter véhicules autour de la valeur de consigne du temps inter véhicules.

L'écran d'affichage de la figure 3 reste ici identique à celui de la figure 2. Cet écran ne comporte pas de pictogramme d'alerte. En revanche, l'écran d'affichage de la figure 4 comprend un pictogramme d'alerte 4 constitué d'un triangle dont les trois côtés 41, 42 et 43, entourent un point d'exclamation 40. Les deux côtés 41 et 42 du triangle, qui se rejoignent à leurs extrémités 44, sont respectivement parallèles aux bords de route 11 et 12.

Le pictogramme d'alerte 4 recouvre le pictogramme de véhicule 2 et les barres horizontales 10 qui ont disparus, ainsi qu'une partie des bords de route 11 et 12.

En mode alerte, les écrans d'affichage des figures 3 et 4 apparaissent respectivement en alternance dans le temps, c'est-à-dire, l'un puis l'autre, à nouveau l'un puis à nouveau l'autre, etc ... Le pictogramme d'alerte 4, qui est dans l'écran d'affichage de la figure 4 mais pas dans l'écran d'affichage de la figure 3, a alors tendance à clignoter, ce qui alertera mieux le conducteur. La flèche F symbolise cette alternance.

Le maintien d'une partie de la représentation graphique du paramètre de conduite qui est le temps inter véhicules, à savoir des portions de bords de route 11 et 12, ainsi que la valeur réelle du temps inter véhicules 3, aide le conducteur à associer l'alerte à un problème dans le respect du temps inter véhicules, ici un problème de franchissement d'un seuil minimum de temps inter véhicules. De préférence, une partie de la représentation graphique du paramètre de conduite, ici le temps inter véhicules, reste fixe lors de l'alternance entre les écrans d'affichage des figures 3 et 4.

De manière préférentielle, préalablement à l'alerte visuelle, le procédé d'aide au respect du temps inter véhicules émet une alerte sonore pour inciter le conducteur à détourner temporairement les yeux de la route pour jeter un coup d'oeil à son écran d'affichage, de manière à ce qu'il puisse se rendre compte de l'objet de l'alerte.

La figure 5 représente schématiquement un deuxième exemple de mise en oeuvre du procédé selon l'invention, dans lequel aucun véhicule précédant le véhicule du conducteur n'a été détecté.

La figure 6 représente schématiquement un deuxième exemple de mise en oeuvre du procédé selon l'invention, dans lequel un véhicule précédant le véhicule du conducteur a été détecté et une valeur de consigne de temps inter véhicules a été choisie par le conducteur. Ici, la valeur réelle du temps inter véhicules n'est pas indiquée, car l'affichage doit être le plus simple possible, puisque c'est un affichage en vision tête haute pour le conducteur qui doit donc pouvoir voir au travers de cet affichage, le reste de la route réelle qui est devant son véhicule.

Les figures 7 et 8 représentent schématiquement un deuxième exemple de mise en oeuvre du procédé selon l'invention, dans lequel la valeur réelle du temps inter véhicules est devenue inférieure à la valeur de consigne de temps inter véhicules choisie par le conducteur, les figures 7 et 8 étant affichées sur l'écran alternativement dans le temps. Sur l'écran d'affichage de la figure 8, le pictogramme 4, lorsqu'il apparaît, n'efface aucun des éléments de la représentation graphique du paramètre de conduite, ici le temps inter véhicules, éléments qui sont affichés sur l'écran d'affichage de la figure 7. Le pictogramme 4 inclut un point d'exclamation 40 et seulement deux des côtés d'un triangle, les côtés 41 et 42, qui se rejoignent à leurs extrémités 44 et qui sont respectivement parallèles aux bords de route 11 et 12.

## Revendications

1. Procédé d'aide au respect d'un seuil pour un paramètre de conduite d'un véhicule par son conducteur, comprenant, lorsque la valeur réelle du paramètre de conduite franchit le seuil dans un sens prédéterminé, une alerte visuelle, comprenant l'affichage sur un écran du véhicule, en alternance dans le temps, d'une représentation graphique (11, 12) du paramètre de conduite avec présence d'un pictogramme d'alerte (4) et d'une représentation graphique (2, 3, 10, 11, 12) du paramètre de conduite sans présence du pictogramme d'alerte (4), de manière à rendre clignotant le pictogramme d'alerte (4), et dans lequel lorsque la valeur réelle du paramètre de conduite n'a encore pas franchi le seuil dans le sens prédéterminé, la représentation graphique (2, 3, 10, 11, 12) du paramètre de conduite sans présence du pictogramme d'alerte (4) est affichée sur l'écran, **caractérisé en ce que** la représentation graphique (2, 3, 10, 11, 12) du paramètre de conduite inclut deux bords (11, 12) de route (1) non parallèles entre eux et **en ce que** le pictogramme d'alerte (4) présente au moins deux côtés (41, 42) qui d'une part sont respectivement parallèles aux bords de route et qui d'autre part se rejoignent à l'une de leurs extrémités respectives (44) ; le pictogramme d'alerte (4) étant agencé par rapport à la représentation graphique de paramètre de conduite de manière à ce que la perspective fuyante de la route vers l'avant, définie par les deux bords (11, 12) de route (1), se prolonge graphiquement pour aboutir directement dans le pictogramme d'alerte (4), le pictogramme d'alerte (4) symbolisant au moins en partie un panneau danger en forme de triangle.

2. Procédé selon l'une quelconque des revendications précédentes, **caractérisé en ce que** la représentation graphique (11, 12) du paramètre de conduite avec présence d'un pictogramme d'alerte (4) et la représentation graphique (2, 3, 10, 11, 12) du paramètre de conduite sans présence du pictogramme d'alerte (4) présentent un ou plusieurs éléments communs (11, 12) restant immobiles lors dudit affichage en alternance dans le temps.

3. Procédé selon l'une quelconque des revendications précédentes, **caractérisé en ce que** le seuil est représentatif de la valeur de consigne, choisie par le conducteur, du paramètre de conduite.

4. Procédé selon l'une quelconque des revendications précédentes, **caractérisé en ce que** le pictogramme d'alerte (4) n'est plus affiché lors du franchissement, par la valeur réelle du paramètre de conduite, dans le sens opposé au sens prédéterminé, d'un autre seuil distinct dudit seuil précédemment franchi dans le sens prédéterminé, de manière à présenter un phénomène d'hystérésis.

5. Procédé selon la revendication 4, **caractérisé en ce que** les seuils sont situés d'une part de part et d'autre de la valeur de consigne, choisie par le conducteur, du paramètre de conduite, et d'autre part au voisinage de la valeur de consigne, choisie par le conducteur, du paramètre de conduite.

6. Procédé selon l'une quelconque des revendications précédentes, **caractérisé en ce que** le paramètre de conduite est le temps inter véhicules séparant le véhicule du conducteur du véhicule qui précède le véhicule du conducteur.

7. Procédé selon l'une quelconque des revendications précédentes, **caractérisé en ce que** la fréquence du clignotement du pictogramme d'alerte (4) est d'autant plus élevée que l'écart entre la valeur réelle du paramètre de conduite et le seuil franchi est plus important.

8. Procédé selon l'une quelconque des revendications 1 à 7, **caractérisé en ce que** l'écran est un écran à matrice de points et **en ce que** le pictogramme d'alerte (4) est ajouté à une représentation graphique (2, 3, 10, 11, 12) du paramètre de conduite tout en remplaçant une partie (10) de la représentation graphique du paramètre de conduite.

9. Procédé selon l'une quelconque des revendications 1 à 7, **caractérisé en ce que** l'écran est un écran à segments dédiés d'un dispositif de vision tête haute inclus dans le véhicule et **en ce que** le pictogramme d'alerte (4) est ajouté à une représentation graphique (2, 3, 10, 11, 12) du paramètre de conduite sans modifier cette représentation graphique (2, 3, 10, 11, 12) du paramètre de conduite.

10. Procédé selon l'une quelconque des revendications précédentes, **caractérisé en ce que** la représentation graphique (2, 3, 10, 11, 12) inclut au moins un pictogramme (2) symbolisant le véhicule précédant le véhicule du conducteur, si un tel véhicule précédent a été détecté.

11. Procédé selon l'une quelconque des revendications précédentes, **caractérisé en ce que** la représentation graphique (2, 3, 10, 11, 12) inclut au moins l'affichage de la valeur réelle (3) du paramètre de conduite, l'affichage de ladite valeur réelle (3) du paramètre de conduite n'étant pas modifié par le clignotement du pictogramme d'alerte (4).

12. Procédé selon la revendication 11, **caractérisé en ce que** l'affichage de la valeur réelle (3) du paramètre de conduite est un affichage alphanumérique.

13. Procédé selon l'une quelconque des revendications précédentes, **caractérisé en ce qu'**il n'est pas couplé à un procédé d'asservissement du paramètre de conduite à la valeur de consigne choisie par le conducteur.

## Patentansprüche

1. Verfahren zur Unterstützung des Fahrers beim Einhalten eines Fahrgrenzwertes, umfassend, wenn der tatsächliche Wert des Fahrwertes die Grenze in eine vorbestimmte Richtung überschreitet, einen visuellen Alarm, umfassend auf einem Bildschirm des Fahrzeugs zeitlich abwechselnd die Anzeige einer grafischen Darstellung (11, 12) des Fahrwerts bei Vorhandensein eines Alarmpiktogramms (4) und einer grafischen Darstellung (2, 3, 10, 11, 12) ohne Vorhandensein des Alarmpiktogramms (4), um das Alarmpiktogramm (4) blinkend zu machen, und bei dem, wenn der tatsächliche Wert des Fahrwerts die Grenze in die vorbestimmte Richtung noch nicht überschritten hat, die grafische Darstellung (2, 3, 10, 11, 12) des Fahrwerts ohne Vorhandensein des Alarmpiktogramms (4) auf dem Bildschirm angezeigt wird, **dadurch gekennzeichnet, dass** die grafische Darstellung (2, 3, 10, 11, 12) des Fahrwerts zwei Ränder (11, 12) einer Straße (1), die zueinander nicht parallel sind, einschließt, und dass das Alarmpiktogramm (4) mindestens zwei Seiten (41, 42) aufweist, die einerseits zu den Straßenrändern parallel sind bzw. andererseits an einem ihrer jeweiligen Enden (44) aneinandergrenzen; wobei das Alarmpiktogramm (4) in Bezug zur grafischen Darstellung eines Fahrwerts derart angeordnet ist, dass die Fluchtperspektive von der Straße nach vorne, die durch die Ränder (11, 12) einer Straße (1) definiert ist, grafisch verlängert ist, um direkt in dem Alarmpiktogramm (4) zu enden, wobei das Alarmpiktogramm (4) zumindest teilweise ein Warnschild in Form eines Dreiecks symbolisiert.

2. Verfahren nach einem der vorhergehenden Ansprüche, **dadurch gekennzeichnet, dass** die grafische Darstellung (11, 12) des Fahrwerts bei Vorhandensein eines Alarmpiktogramms (4) und die grafische Darstellung (2, 3, 10, 11, 12) des Fahrwerts ohne Vorhandensein des Alarmpiktogramms (4) ein oder mehrere gemeinsame Elemente (11, 12) aufweisen, die bei der zeitlich abwechselnden Anzeige unbeweglich bleiben.

3. Verfahren nach einem der vorhergehenden Ansprüche, **dadurch gekennzeichnet, dass** die Grenze für den Sollwert des Fahrwerts, der vom Fahrer ausgewählt ist, repräsentativ ist.

4. Verfahren nach einem der vorhergehenden Ansprüche, **dadurch gekennzeichnet, dass** das Alarmpiktogramm (4) nicht mehr angezeigt wird, wenn der tatsächliche Wert des Fahrwerts in die zur vorbestimmten Richtung entgegengesetzte Richtung eine weitere Grenze überschreitet, die zu der vorher in die vorbestimmte Richtung überschrittenen Grenze unterschiedlich ist, um ein Hysteresephänomen aufzuweisen.

5. Verfahren nach Anspruch 4, **dadurch gekennzeichnet, dass** sich die Grenzen einerseits auf beiden Seiten des Sollwerts des Fahrwerts, der vom Fahrer ausgewählt ist, und andererseits in der Nähe des Sollwerts des Fahrwerts, der vom Fahrer ausgewählt ist, befinden.

6. Verfahren nach einem der vorhergehenden Ansprüche, **dadurch gekennzeichnet, dass** der Fahrwert die Zeit zwischen den Fahrzeugen ist, die das Fahrzeug des Fahrers des Fahrzeugs von dem Fahrzeug, das vor dem Fahrzeug des Fahrers fährt, trennt.

7. Verfahren nach einem der vorhergehenden Ansprüche, **dadurch gekennzeichnet, dass** die Blinkfrequenz des Alarmpiktogramms (4) umso höher ist, desto größer der Abstand zwischen dem tatsächlichen Wert des Fahrwerts und der überschrittenen Grenze ist.

8. Verfahren nach einem der Ansprüche 1 bis 7, **dadurch gekennzeichnet, dass** der Bildschirm ein Bildschirm mit Punktmatrix ist, und dass das Alarmpiktogramm (4) zu einer grafischen Darstellung (2, 3, 10, 11, 12) des Fahrwerts hinzugefügt wird, wobei ein Teil (10) der grafischen Darstellung des Fahrwerts ersetzt wird.

9. Verfahren nach einem der Ansprüche 1 bis 7, **dadurch gekennzeichnet, dass** der Bildschirm ein Bildschirm mit Spezialsegmenten eines Head-Up-Displays, das in das Fahrzeug integriert ist, ist, und dass das Alarmpiktogramm (4) zu einer grafischen Darstellung (2, 3, 10, 11, 12) des Fahrwerts hinzugefügt wird, ohne diese grafische Darstellung (2, 3, 10, 11, 12) des Fahrwerts zu verändern.

10. Verfahren nach einem der vorhergehenden Ansprüche, **dadurch gekennzeichnet, dass** die grafische Darstellung (2, 3, 10, 11, 12) mindestens ein Piktogramm (2) einschließt, das das Fahrzeug vor dem Fahrzeug des Fahrers symbolisiert, wenn ein solches vorherfahrendes Fahrzeug erfasst wurde.

11. Verfahren nach einem der vorhergehenden Ansprüche, **dadurch gekennzeichnet, dass** die grafische Darstellung (2, 3, 10, 11, 12) mindestens die Anzeige des tatsächlichen Werts (3) des Fahrwerts einschließt, wobei die Anzeige des tatsächlichen Werts (3) des Fahrwerts durch das Blinken des Alarmpiktogramms (4) nicht verändert wird.

12. Verfahren nach Anspruch 11, **dadurch gekennzeichnet, dass** die Anzeige des tatsächlichen Werts (3) des Fahrwerts eine alphanumerische Anzeige ist.

13. Verfahren nach einem der vorhergehenden Ansprüche, **dadurch gekennzeichnet, dass** es nicht mit einem Verfahren zur Steuerung des Fahrwerts auf den vom Fahrer gewählten Sollwert gekoppelt ist.

## Claims

1. A method for assisting a driver in respecting a threshold for a driving limit value when driving a vehicle, including, when the actual value of the driving limit value crosses the threshold in a predetermined direction, a visual warning, including the display on a screen of the vehicle, alternating over time, of a graphic representation (11, 12) of the driving limit value with the presence of a warning pictogram (4) and of a graphic representation (2, 3, 10, 11, 12) of the driving limit value without the presence of the warning pictogram (4), so as to cause the warning pictogram (4) to flash, and in which when the actual value of the driving limit value has not yet crossed the threshold in the predetermined direction, the graphic representation (2, 3, 10, 11, 12) of the driving limit value without the presence of the warning pictogram (4) is displayed on the screen, **characterized in that** the graphic representation (2, 3, 10, 11, 12) of the driving limit value includes two edges (11, 12) of the road (1) not parallel to one another and **in that** the warning pictogram (4) has at least two sides (41, 42) which on the one hand are respectively parallel to the road edges and which on the other hand join each other at one of their respective ends (44); the warning pictogram (4) being arranged with respect to the graphic representation of the driving limit value such that the receding perspective of the road toward the front, defined by the two edges (11, 12) of the road (1), extends graphically to end directly in the warning pictogram (4), the warning pictogram (4) symbolising at least in part a triangular-shaped warning sign.

2. The method according to any one of the preceding claims, **characterized in that** the graphic representation (11, 12) of the driving limit value with the presence of a warning pictogram (4) and the graphic representation (2, 3, 10, 11, 12) of the driving limit value without the presence of the warning pictogram (4) present one or more common elements (11, 12) remaining immobile during said display alternating over time.

3. The method according to any one of the preceding claims, **characterized in that** the threshold is representative of the setpoint, selected by the driver, of the driving limit value.

4. The method according to any one of the preceding claims, **characterized in that** the warning pictogram (4) is no longer displayed on the crossing, by the actual value of the driving limit value, in the opposite direction to the predetermined direction, of another threshold distinct from the said threshold previously crossed in the predetermined direction, so as to present a hysteresis phenomenon.

5. The method according to Claim 4, **characterized in that** the thresholds are situated on the one hand on either side of the setpoint, selected by the driver, of the driving limit value, and on the other hand in the vicinity of the setpoint, selected by the driver, of the driving limit value.

6. The method according to any one of the preceding claims, **characterized in that** the driving limit value is the inter-vehicle time separating the vehicle of the driver from the vehicle which precedes the vehicle of the driver.

7. The method according to any one of the preceding claims, **characterized in that** the frequency of the flashing of the warning pictogram (4) is all the higher the greater the gap between the actual value of the driving limit value and the crossed threshold.

8. The method according to any one of Claims 1 to 7, **characterized in that** the screen is a dot matrix screen and **in that** the warning pictogram (4) is added to a graphic representation (2, 3, 10, 11, 12) of the driving limit value whilst replacing a portion (10) of the graphic representation of the driving limit value.

9. The method according to any one of Claims 1 to 7, **characterized in that** the screen is a screen with dedicated segments of a head up display included in the vehicle and **in that** the warning pictogram (4) is added to a graphic representation (2, 3, 10, 11, 12) of the driving limit value without modifying this graphic representation (2, 3, 10, 11, 12) of the driving limit value.

10. The method according to any one of the preceding claims, **characterized in that** the graphic representation (2, 3, 10, 11, 12) includes at least one pictogram (2) symbolising the vehicle preceding the vehicle of the driver, if such a preceding vehicle has been detected.

11. The method according to any one of the preceding claims, **characterized in that** the graphic representation (2, 3, 10, 11, 12) includes at least the display of the actual value (3) of the driving limit value, the display of said actual value (3) of the driving limit value not being modified by the flashing of the warning pictogram (4).

12. The method according to Claim 11, **characterized in that** the display of the actual value (3) of the driving limit value is an alphanumeric display.

13. The method according to any one of the preceding claims, **characterized in that** it is not coupled to a servo method of the driving limit value to the setpoint selected by the driver.
